# EUROPEAN PATENT SPECIFICATION

(11) **EP 3 996 517 B1**
(45) Date of publication and mention of the grant of the patent: **25.03.2026**
(21) Application number: 20737044.6
(22) Date of filing: 10.07.2020
(51) Int. Cl.: A23J 3/14, A23J 3/22, A23J 3/26, A23J 3/16, A23J 3/18

(54) **BACON ANALOGUE PRODUCT**
BACON-ANALOGPRODUKT
PRODUIT SIMILAIRE AU BACON

(30) Priority: 12.07.2019 EP 19186161; 18.03.2020 EP 20163926
(43) Date of publication of application: 18.05.2022
(73) Proprietor: Société des Produits Nestlé S.A., 1800 Vevey (CH)
(72) Inventor: HERZ, Eva, 70599 STUTTGART (DE); HERZ, Laura, 71088 HOLZGERLINGER (DE); PIBAROT, Patrick, 1820 TERRITET (CH); RAY, Joydeep, 1066 Epalinges (CH); SCHMITT, Christophe, Joseph, Etienne, 1077 SERVION (CH); WEISS, Jochen, 72664 KOHLBERG (DE); FERNANDEZ FARRES, Isabel, 1012 Lausanne (CH); PELLOUX, Cindy, 74500 Champanges (FR)
(74) Representative: Slaven, John William
(86) International application number: PCT/EP2020/069649
(87) International publication number: WO 2021/009075

(56) References cited:
- EP-A1- 0 505 412
- US-A- 3 840 677
- US-B1- 6 635 301
- US-B2- 10 172 381

## Description

The invention is in the field of plant based meat alternatives, more specifically in the field of a plant based bacon alternatives.

### Background of the invention

Bacon is one of the most preferred foods worldwide. It is used in many traditional dishes, and is often served with fried or scrambled eggs, in burgers, or on pizzas.

One of the major dietary trends is the switch by consumers towards vegan products devoid of animal derived ingredients.

Some existing bacon analogues can be made at home by marinating strips of tempeh or tofu in various flavorings, such as soy sauce or liquid smoke, and then either fried or baked. Aficionados of raw food may also use coconut meat as a bacon substitute. Seitan can also be used for vegetarian bacon. The taste, appearance and texture of these products are generally very poor.

There is also a strong general trend towards clean label food products. Existing products on the market are often made of soya protein and typically have a long list of ingredients like eggs, additives, gums and flavors.

There is a clear need for new bacon analogue products, which offer the consumer all the advantages of bacon in terms of taste, texture, and appearance but which are also clean label. US 3840677A discloses bacon like meat analogs containing vegetable protein, albumen, fat, and water.

US 10172381 B2 describes a meat substitute which replicates the effect of "marbling," or streaky bacon and which is constructed from a muscle tissue replica, an adipose tissue replica and a connective tissue replica.

### Summary of the invention

The invention is set out in the appended set of claims. Not according to the invention disclosed is a method of making a bacon analogue product, said method comprising preparing a protein extrudate, protein dispersion, and fat mimetic; optionally applying a binding agent; arranging the protein extrudate, fat mimetic, and protein dispersion in layers; pressing the arranged layers; heating; cooling; and optionally smoking and/or slicing.

Not according to the invention disclosed is a method of making a bacon analogue product, said method comprising preparing a plant protein extrudate, plant protein dispersion and fat mimetic by emulsification; optionally applying a binding agent, preferably to the plant protein extrudate; arranging the plant protein extrudate, fat mimetic, and plant protein dispersion in layers; pressing the arranged layers; heating to obtain a cohesive mass; cooling; and optionally smoking, slicing and/or shredding. Not according to the invention disclosed is a method of making a bacon analogue product, said method comprising preparing a plant protein extrudate, preferably by wet extrusion; preparing a plant protein dispersion, preferably a 10 to 20% (w/w) plant protein dispersion, preparing a fat mimetic by emulsification, preferably by emulsification of a protein dispersion and a lipid phase; optionally applying a binding agent to the plant protein extrudate or fat mimetic; arranging the plant protein extrudate, fat mimetic, and protein dispersion in layers; pressing the arranged layers; heating to obtain a cohesive mass; cooling; and optionally smoking, slicing and/or shredding.

The present invention relates to a method of making a bacon analogue product, said method comprising
a. Preparing a plant protein extrudate by wet extrusion;
b. Preparing by using soy protein isolate (SPI) a 14% w/w SPI dispersion, wherein the SPI dispersion further comprises transglutaminase;
c. Preparing a fat mimetic by emulsifying a plant protein dispersion and a lipid phase, wherein the fat mimetic is prepared by emulsifying a mixture of 30% w/w of a plant protein dispersion and 70% w/w of a lipid phase;
d. Arranging the plant protein extrudate, fat mimetic, and SPI dispersion in layers, by adding the plant protein extrudate layer, followed by a defined amount of the SPI dispersion and then by adding the fat mimetic;
e. Pressing the arranged layers;
f. Heating to obtain a cohesive mass;
g. Cooling;
h. Optionally smoking, slicing or shredding.

Not according to the invention disclosed is a bacon analogue product comprising protein extrudate, protein dispersion, fat mimetic and optional binding agent.

The present invention also relates to a bacon analogue product obtained by the method according to the invention, comprising:
a. Plant protein extrudate prepared by wet extrusion;
b. A soy protein isolate dispersion comprising 14 w/w soy protein isolate and transglutaminase; and
c. Fat mimetic comprising 30% w/w of a plant protein isolate dispersion emulsified in 70% w/w of a lipid phase.

### Description of the invention

The invention relates to a method of making a bacon analogue product, said method comprising
a. Preparing a plant protein extrudate by wet extrusion;
b. Preparing by using soy protein isolate (SPI) a 14% w/w SPI dispersion, wherein the SPI dispersion further comprises transglutaminase;
c. Preparing a fat mimetic by emulsifying a plant protein dispersion and a lipid phase, wherein the fat mimetic is prepared by emulsifying a mixture of 30% w/w of a plant protein dispersion and 70% w/w of a lipid phase;
d. Arranging the plant protein extrudate, fat mimetic, and SPI dispersion in layers, by adding the plant protein extrudate layer, followed by a defined amount of the SPI dispersion and then by adding the fat mimetic;
e. Pressing the arranged layers;
f. Heating to obtain a cohesive mass;
g. Cooling;
h. Optionally smoking, slicing or shredding.

In some embodiments, the plant protein extrudate is prepared using a twin or mon- screw extruder.

In some embodiments, the plant protein extrudate is a textured plant protein extrudate.

In some embodiments, the plant protein extrudate is a fibrous plant protein extrudate.

In some embodiments, the plant protein extrudate has a water content of not less than 45% (w/w).

In some embodiments, the plant protein extrudate is a blend of more than one plant protein.

In some embodiments, the plant protein extrudate has a water content of not less than the glass transition temperature of the plant protein extrudate at a consumption temperature of the bacon analogue product of between 30 to 60°C.

In some embodiments, the plant protein extrudate or the fat mimetic further comprises coloring and/or flavoring, preferably smoked flavoring.

In some embodiments, the plant protein extrudate is cooked, preferably in vegetable broth.

Typically, the cooked plant protein extrudate is coated with a binding agent.

In some embodiments, the binding agent is selected from soy protein isolate dispersion, soy protein isolate powder, gluten powder, transglutaminase, and dietary fiber and plant protein.

The composition of the binding agent that goes between the plant protein extrudate and fat mimetic layers is the most critical parameter to ensure a good product cohesiveness after defrosting.

In one embodiment, the binding agent comprises dietary fiber and plant protein.

In one embodiment, the total wt% of dietary fiber and plant protein in the binding agent is less than 40 wt%.

In one embodiment, not less than 50 wt% of the dietary fiber is soluble, preferably 50 wt% to 70 wt% of the dietary fiber is soluble, preferably about 60 wt%. of the dietary fiber is soluble.

In one embodiment, the dietary fiber and plant protein are present in a ratio of about 67:33.

In one embodiment, the dietary fiber is potato fiber.

In one embodiment, the plant protein is potato protein.

In one embodiment, the dietary fiber is potato fiber and the plant protein is potato protein.

Typically, the binding agent further comprises an enzyme solution, wherein the enzyme is selected from transglutaminase, tyrosinase and oxidase, for example a polyphenol oxidase. If the enzyme is a polyphenol oxidase, then preferably it is a laccase. Typically, the enzyme solution is transglutaminase solution, preferably a 10% (w/w) transglutaminase solution.

Preferably, the binding agent comprises transglutaminase, dietary fiber and plant protein.

In the method of the invention, the fat mimetic is prepared by emulsifying a mixture of 30% of a protein dispersion and 70% w/w of a lipid phase.

In some embodiments, the fat mimetic further comprises dietary fiber. This has shown to be important to ensure good product cohesiveness after defrosting.

In some embodiments, the dietary fiber comprises a starch content of between 35 wt% to 40 wt%.

In some embodiments, the dietary fiber has a water holding capacity of between 7.5 g/g and 12.5 g/g, preferably a water holding capacity of about 10g/g.

In one embodiment, the fat mimetic comprises about 5 wt% dietary fiber, more preferably about 2.5 wt% dietary fiber.

In one embodiment, the dietary fiber is pea cell wall fiber.

In one embodiment, the pea cell wall fiber is dispersed in the melted fat blend to form a solution. In one embodiment, said solution is added under shear to the protein dispersion.

In some embodiments, the final concentration of protein in the emulsifying mixture is about 3% (w/w).

In some embodiments, the protein dispersion is pre-heated at temperatures not greater than 95°C.

In the method of the invention, the protein dispersion is a protein isolate dispersion prepared using a soy protein isolate.

In the method of the invention, the protein isolate dispersion comprises 14% w/w soy protein isolate and further comprises transglutaminase.

In some embodiments, the lipid phase comprises canola oil or a mixture comprising about 70% (w/w) canola oil and about 30% (w/w) solid fat.

In some embodiments, salt is added to the protein isolate dispersion and lipid phase emulsifying mixture.

In some embodiments, heating step f) comprises
a. heating to a core temperature of about 40°C; and
b. heating to a core temperature of about 85°C.

Typically, heating step comprises
a. heating to a core temperature of about 40°C for about 1 hour; and
b. heating to a core temperature of about 85°C for about 1 hour.

In some embodiments, cooling step g) comprises showering in cold water, preferably for about 10 minutes.

In some embodiments, the cohesive mass is smoked in a chamber.

In some embodiments, the cohesive mass is sliced.

In some embodiments, the cohesive mass is shredded.

In some embodiments, the bacon analogue product is fried.

In some embodiments, not according to the invention, the present disclosure relates to a method of making a bacon analogue product, said method comprising
a. Preparing a plant protein extrudate by wet extrusion;
b. Preparing a 14 to 16% (w/w) soy protein iolate dispersion;
c. Preparing a fat mimetic by emulsifying a plant protein dispersion and a lipid phase;
d. Applying a binding agent to the plant protein extrudate or fat mimetic, wherein the binding agent is selected from soy protein isolate dispersion, soy protein isolate powder, and gluten powder, and further comprises transglutaminase solution;
e. Arranging the plant protein extrudate, fat mimetic, and soy protein isolate dispersion in layers;
f. Pressing the arranged layers;
g. Heating at about 85°C to obtain a cohesive mass;
h. Cooling; and
i. Optionally, smoking, slicing or shredding.

The invention also relates to a bacon analogue product obtained by the method according to the invention, comprising:
a. Plant protein extrudate prepared by wet extrusion;
b. A soy protein isolate dispersion comprising 14 w/w soy protein isolate and transglutaminase; and
c. Fat mimetic comprising 30% w/w of a plant protein isolate dispersion emulsified in 70% w/w of a lipid phase.

In some embodiments, the plant protein extrudate is a textured plant protein extrudate.

In some embodiments, the plant protein extrudate is a fibrous plant protein extrudate.

In some embodiments, the plant protein extrudate is a blend of more than one plant protein.

In some embodiments, the bacon analogue product further comprises coloring and/or flavoring, preferably smoked flavoring.

In some embodiments, not according to the present invention, the bacon analogue product comprises a binding agent, wherein the binding agent may be selected from soy protein isolate dispersion, soy protein isolate powder, gluten powder, transglutaminase, dietary fiber and plant protein.

In one embodiment, the total wt% of dietary fiber and plant protein in the binding agent is less than 40 wt%.

In one embodiment, not less than 50 wt% of the dietary fiber is soluble, preferably 50 wt% to 70 wt% of the dietary fiber is soluble, preferably about 60 wt%. of the dietary fiber is soluble.

In one embodiment, the dietary fiber and plant protein are present in a ratio of about 67:33.

In one embodiment, the dietary fiber is potato fiber. In one embodiment, the plant protein is potato protein.

In one embodiment, the dietary fiber is potato fiber and the plant protein is potato protein.

In one embodiment, the binding agent is a blend of potato fiber and potato protein.

In one embodiment, the binding agent is a blend of potato fiber and potato protein wherein the ratio of potato fiber to potato protein is about 67:33.

In one embodiment, the binding agent further comprises an enzyme solution. Typically, the enzyme solution is selected from transglutaminase, tyrosinase and oxidase, preferably about 10% (w/w) transglutaminase solution.

In the bacon analogue product according to the invention, the fat mimetic comprises 30% w/w of a plant protein dispersion comprising a protein isolate and 70% w/w of a lipid phase. The protein dispersion is a plant protein isolate dispersion. Typically, the protein isolate dispersion is a soy, potato, pea, or canola protein isolate dispersion, preferably a soy protein isolate dispersion. Typically, the protein isolate dispersion comprises 10 to 20% (w/w) soy protein isolate.

In the bacon analogue product according to the invention, the protein isolate dispersion comprises 14% w/w soy protein isolate and transglutaminase.

In some embodiments, the lipid phase is canola oil or a mixture comprising 70% (w/w) canola oil and 30% (w/w) solid fat.

In some embodiments, the bacon analogue product comprises between 45 to 48% water, 12 to 16% canola oil, and 8 to 10% wheat gluten.

The bacon analogue product of the invention is obtained by the method according to the invention.

In some embodiments, the bacon analogue product is devoid of animal products. The bacon analogue product is typically devoid of egg ingredients, for example egg white.

In some embodiments, the bacon analogue product is devoid of additives. The bacon analogue product is typically devoid of hydrocolloids. The bacon analogue product is typically devoid of methylcellulose. The bacon analogue product is typically devoid of gums. The bacon analogue product is typically devoid of alginates. The bacon analogue product is typically devoid of modified starch.

### Detailed description of the invention

### Definitions

As used herein, "about" is understood to refer to numbers in a range of numerals, for example the range of -30% to +30% of the referenced number, or -20% to +20% of the referenced number, or -10% to +10% of the referenced number, or -5% to +5% of the referenced number, or -1% to +1% of the referenced number. All numerical ranges herein should be understood to include all integers, whole or fractions, within the range. Moreover, these numerical ranges should be construed as providing support for a claim directed to any number or subset of numbers in that range.

The products disclosed herein may lack any element that is not specifically disclosed herein.

Thus, a disclosure of an embodiment using the term "comprising" includes a disclosure of embodiments "consisting essentially of" and "consisting of" the components identified. Similarly, the methods disclosed herein may lack any step that is not specifically disclosed herein. Thus, a disclosure of an embodiment using the term "comprising" includes a disclosure of embodiments "consisting essentially of" and "consisting of" the steps identified. Any embodiment disclosed herein can be combined with any other embodiment disclosed herein unless explicitly and directly stated otherwise.

Unless defined otherwise, all technical and scientific terms and any acronyms used herein have the same meanings as commonly understood by one of ordinary skill in the art in the field of the invention.

As used herein, the term "additive" includes one or more of hydrocolloids (e.g. carboxymethylcellulose, methylcellulose, hydroxypropylmethylcellulose, konjac gum, carragenans, xanthan gum, gellan gum, locust bean gum, alginates, agar, gum arabic, gelatin, Karaya gum, Cassia gum, microcrystalline cellulose, ethylcellulose); emulsifiers (e.g. lecithin, mono and diglycerides, PGPR); whitening agents (e.g. titanium dioxide); plasticizers (e.g. glycerine); anti-caking agents (e.g. silicon-dioxide).

### Plant protein extrudate

The plant protein extrudate in the method of the invention may be prepared using a twin screw extruder.

The resulting structured product may have substantially aligned fibers. Dough can be prepared in a mixer at a mixing speed of about 30 rpm.

The ingredients of the extrudate can, for example, be prepared using pea protein isolate, wheat gluten, and micronized protein TVP.

In one embodiment, the extrudate comprises wheat gluten, preferably between 10 to 30 wt% wheat gluten, more preferably between 10 to 20 wt% wheat gluten, more preferably 12 to 18 wt% wheat gluten, most preferably about 14.2 wt%. This has been shown to be important to achieve good cohesiveness after grilling.

The ingredients of the extrudate can, for example, be prepared using pea protein isolate, wheat gluten, micronized protein TVP, base note aroma mixture, soy protein isolate, rapeseed oil, and coloring ingredient.

The ingredients of the extrudate can, for example, be prepared using pea protein isolate, wheat gluten, micronized protein TVP, starch, salt or iodized salt (NaCl), base note aroma mixture, vitamin mineral premix, top note aroma mixture, pea protein isolate, soy protein isolate (e.g. Supro 37 from Dupont Solae), and rapeseed oil.

The mixture can be mixed for about 3 minutes to form homogenous dough. It can then be pumped, for example at about 15 kg/h.

A slit die can be connected to the exit of the extruder. The temperature of the die can be maintained below 100°C. Flavor and coloring ingredients can be injected to adjust the extruded product color and flavor to reproduce pork meat organoleptic properties. For example, they can be injected as an emulsion towards the end of the extrusion process.

The plant protein extrudate should have a water content above 45g/100g. This ensures hydration of the protein.

The extrudate should remain at a moisture above the glass transition moisture of the protein or protein blend, which is used, at the consumption temperature (30-60°C) (after frying or baking) of the finished product. The protein with the lowest glass transition moisture at 50°C should be taken into account to define the minimum moisture of the semi-finished texturize product.

If the protein extrudate moisture after extrusion is below the minimum value, then the protein extrudate can be rehydrated either by soaking in water or boiled in a broth before frying or cooking. This ensures the non-brittle texture of the bacon finished product.

The minimum moisture should be defined as a function of the protein composition of the extrudate.

### Plant protein gel

Plant protein dispersions can be prepared using soy protein, for example soy protein isolate dispersion (SPI). SPI dispersions can be made with about 10, 11, 12, 13, 14, 15, 16, 17, 18, 19, or 20% (w/w) SPI. The dispersions can be prepared by mixing SPI powder and coagulants with water. For example, the dispersions can be prepared in a mini food processor. After every 30 seconds, the dispersion can be additionally mixed by hand. The protein dispersion can be filled into one or more receptacles. It can then be heated for about 30 minutes at 70, 80, 85 or 90 °C. Any temperature in the range 70 to 90°C may be used.

In the method of the present invention, SPI dispersions are made with 14 w/w SPI. A heating temperature of about 85 °C may be used. SPI dispersions can be heated for about 30 minutes. CaCl₂, MgCl₂, or CaSO₄ can be added in concentrations between 1 and 5 %. One or more of CaCl₂, MgCl₂, and CaSO₄ can be added to a soy protein dispersion with 14 % SPI.

Transglutaminase, MgCl₂ and/or CaCl₂ can be added at concentrations of, for example, between 3 to 5 %.

The samples can then be cooled to room temperature, and stored at about 2 °C.

The hardness of the SPI gels can be analyzed at room temperature by a puncture test with a texture analyzer, for example an Instron, Model 3365. Tests can be performed with a cylindrical stainless-steel geometry (diameter 13 mm) penetrating the samples at a speed of 1.5 mm/s up to a deformation of 75 %.

### Fat mimetic (emulsion) gel

Fat mimetic (emulsion gel) can be prepared, for example, by emulsifying about 70 % (w/w) lipid-phase and about 30 % of a SPI dispersion. The SPI dispersion can be about 10%. The resulting total concentration can be about 3 % SPI in the emulsion. The lipid phase may contain canola oil or it may contain about 70 % canola oil and about 30 % solid fat. The solid fat can be melted into the oil. A food processor can be used to make the emulsion. The oil phase may be slowly added to the SPI dispersion while constantly stirring. When all the oil is mixed in, about 1% sodium chloride and about 0.75% of, for example, a 10% transglutaminase solution (about 25 mg TG/ g SPI) can be added. The emulsion can then be filled into flexible aluminum forms and heat treated, for example, in a heating chamber. First, it can be heated to a core temperature of about 40 °C. This can be kept constant for about one hour. This gives the transglutaminase the possibility to react. Next, the product can be heated at a chamber temperature of about 90 °C. It should reach a core temperature of about 85 °C to deactivate the enzyme and ensure protein gelation. It can then be cooled with a cold shower for about 10 min. It can then be stored at about 2 °C.

### Binder or binding agent

A binder or binding agent may be applied to the plant protein extrudate or fat mimetic. The binding agent may be applied or coated on plant protein extrudate, for example cooked plant protein extrudate. The binding agent can be selected, for example, from soy protein isolate dispersion, soy protein isolate powder, gluten powder, transglutaminase, dietary fiber and plant protein.

In one embodiment, the binding agent comprises dietary fiber and plant protein. In one embodiment, the total wt% of dietary fiber and plant protein in the binding agent is less than 40 wt%. In one embodiment, not less than 50 wt% of the dietary fiber is soluble, preferably 50 wt% to 70 wt% of the dietary fiber is soluble, preferably about 60 wt%. of the dietary fiber is soluble. In one embodiment, the dietary fiber and plant protein are present in a ratio of about 67:33. In one embodiment, the dietary fiber is potato fiber. In one embodiment, the plant protein is potato protein. In one embodiment, the dietary fiber is potato fiber and the plant protein is potato protein. In one embodiment, the binding agent comprises potato fiber and potato protein wherein the ratio of potato fiber to potato protein is about 67:33.

The binding agent may further comprise an enzyme solution. The enzyme can be selected from transglutaminase, tyrosinase and oxidase, for example a polyphenol oxidase. Transglutaminase may be used, for example, at a final concentration in the product of between 0.35 to 0.5% (w/w), or at about 0.42% (w/w).

In one embodiment, the binding agent comprises potato fiber, potato protein, and transglutaminase.

The binding agent may be soy protein isolate dispersion, for example at 16 % (w/w). In some variations, the emulsion gel (fat mimetic) can be heated in situ and added to the extrudate before the heating step. In this case, no SPI dispersions need to used as binder.

The binding agent may be gluten coated on cooked extrudate, or a combination of transglutaminase solution and gluten powder, or a combination of transglutaminase solution and soy protein isolate powder coated on cooked extrudate.

The extrudate can be first coated with a 10 % (w/w) transglutaminase solution and then with gluten or SPI powder or directly coated with gluten or SPI powder.

The extrudate may be cooked in vegetable broth. It may be cooked at about 90 °C. It can be cooked for about 15 minutes. This can be done to change the texture and taste.

### Layering

The extrudate and the fat mimetic can be cut and layered, for example in a flexible aluminum form. The extrudate layer can be added, followed by a defined amount of SPI dispersion. The dispersion can be spread on top as evenly as possible. The fat mimetic may then be added. The form can be closed with a second similar form. A weight can be placed on top to press the product while heating. Heating can be for about 1 hour at about 40 °C and then for about 1 hour at about 85 °C. After heating, it can be cooled to room temperature. It can then be stored at about 2 °C.

### Experiments not according to the invention

### 1

### Ingredient preparation

Soy protein isolate, Supro EX 37 HG IP (protein content minimum 90% on dry basis according to the manufacturer) from Solae Europe S.A. (Geneva, Switzerland) was used to prepare protein dispersions. Furthermore, transglutaminase (TG) (Transglutaminase Activa WM, provided by Ajinomoto Foods Europe SAS), glucono-δ-lactone (Roquette Frères, France), calcium sulfate (ThermoFisher (Kandel) GmbH, Germany), calcium chloride and magnesium chloride (Carl Roth GmbH + Co. KG, Germany), ferrous sulfate (Sigma Aldrich, Germany) and gluten (Weizengluten vital, provided by Kröner Stärke GmbH, Ibbenbühren, Germany) were used as coagulants or coating agents. The canola oil used for the emulsion gels was purchased from MEGA - Das Fachzentrum für die Metzgerei und Gastronomie eG (Stuttgart, Germany). The solid fat, as well as the plant protein extrudate were provided internally.

Soy protein gels were prepared. SPI dispersions with 10, 12, 14 and 16% (w/w) SPI were prepared by mixing the SPI powder and coagulants with tap water in a mini food processor for 30 seconds at level 1 and for further 60 seconds at level 2. After every 30 seconds, the dispersion was additionally mixed by hand with a spoon (to remove lumps from the wall). The protein dispersion was filled into ten 30 mL Nalgene beakers and heated for 30 minutes at 70, 80, 85 or 90 °C in a preheated water bath. After cooling to room temperature, the samples were stored in a cold storage room at 2 °C.

The hardness of the SPI gels was analyzed at room temperature by a puncture test with a texture analyzer (Instron, Model 3365, Instron Engineering Corporation Ltd, Canton, USA). Tests were performed with a cylindrical stainless-steel geometry (diameter 13 mm) penetrating the samples at a speed of 1.5 mm/s up to a deformation of 75 %. Per gel sample, 10 probes were tested.

A fat mimetic (emulsion gel) was prepared. The emulsion was composed of 70 % (w/w) oil-phase and 30 % of a 10 % SPI dispersion, resulting in a total concentration of 3 % SPI in the emulsion. The oil phase contained either pure canola oil or was prepared with 70 % canola oil and 30 % solid fat, which was melted into the liquid oil. A mini food processor was used to make the emulsion by slowly adding the oil phase to the SPI dispersion while constantly stirring. When all the oil was mixed in, 1% sodium chloride and 0.75% of a 10% transglutaminase solution (25 mg TG/ g SPI) were added. Then, the emulsion was filled into flexible aluminum forms and heat treated in a heating chamber. First, it was heated to a core temperature of 40 °C which was kept constant for one hour to give the transglutaminase the possibility to react. Next, the product was heated at a chamber temperature of 90 °C until it reached a core temperature of 85 °C and cooled with a cold shower for 10 min, before storing at 2 °C.

The fat mimetic was adhered to the extrudate with binder. SPI dispersions with 16 % (w/w) SPI were prepared as described herein and used as binder. The extrudate and the fat mimetic were cut (in the right form) into according dimensions and layered in a flexible aluminum form with a length of 12.2 cm and a width of 8.3 cm. First, the extrudate layer was added, then a defined amount of SPI dispersion was spread on top of it as evenly as possible. Finally, the fat mimetic was added. The form was closed with a second similar form and aluminum foil to prevent water ingress and a defined weight of 8 g/cm² was placed on top to press the product while heating in a waterbath. The samples were heated for 1 hour at 40 °C and then for 1 h at 85 °C in 2 different waterbaths. After heating, the sample was cooled to room temperature and stored at 2 °C.

In some variations, the emulsion gel (fat mimetic) was heated in situ. For this variation, the emulsion was freshly prepared as described herein and added to the extrudate before the heating step. In this case, no SPI dispersions were used as binder. For the tensile test samples, 35 g emulsion gel were spread in a flexible aluminum form and one layer of extrudate was placed on top. The heating and cooling of the samples were performed as described herein.

Another option to modify the adherence was coating the extrudate with gluten or SPI powder and TG-solution. Before adding the extrudate to the emulsion gel in the aluminum form, it was either first coated with a 10 % transglutaminase solution and then with gluten or SPI powder or directly coated with one of the powders.

In some variations, the extrudate was cooked in vegetable broth at 90 °C for 15 min to change the texture and taste. After 15 min in the broth, the extrudate had soaked up 25 % liquid.

### Preparation of extrudate

A Twin Screw Extruder (TSE) was used to prepare a structured product having aligned fibers on the basis of wheat gluten in combination with pea proteins. A dough was prepared in a Planetaria Tekno mixer at 30 rpm by mixing the following ingredients as shown in Table 1:

**Table 1:**

| **Ingredients** | % **wb** |
|---|---|
| Pea protein isolate (Roquette) | **12.00** |
| Pea protein isolate (Cosucra) | **12.00** |
| Vital Wheat Gluten | **10.40** |
| Water | **53.80** |
| Pea protein TVP MICRONIZED | **7.80** |
| Salt NaCl lodised | **0.50** |
| Base note Aroma mixture (meat/Pork) | **1.70** |
| Vitamin Mineral Premix | **0.05** |
| Top note Aroma mixture (meat/Pork) | **0.12** |
| Soy protein isolate Supro 37 | **0.90** |
| Rapeseed oil | **0.69** |
| color Red Beet P-WS | **0.06** |

The mixture was mixed during three minutes to form an homogeneous dough. This dough was then pumped to the first barrel of the extruder at 15 kg/h.

A slit die was connected to the exit of the extruder. The temperature of the die was maintained below 100°C. Flavor and coloring ingredients were injected in the extruder to adjust the extruded product color and flavor to reproduce pork meat organoleptic properties.

After equilibration of the extrusion and die flow and temperature, a texturized product with fibers aligned in average perpendicular to the flow of dough at the exit of the slit die was obtained.

### Tensile tests

The adhesiveness of the adhered fat-extrudate samples was analyzed by a tensile test with a texture analyzer. Twenty squares with a diameter of 2 cm were cut out of each sample. The upper and lower outer surface of the squares were glued to stainless steel stabs of the same diameter using a cyanoacrylate adhesive. The stubs bearing the samples were mounted into the grip of the texture analyzer and pulled apart at a constant speed of 1 mm/s, while the maximum force and the area under the curve were recorded.

### Development of a Prototype Production Method

Various embodiments were tested in the development of a prototype bacon. Additionally, different molding systems were tested. The same aluminum forms as in the previous experiments with weights on top were tested, as well as ham forms (Fa. Adelmann GmbH, Germany) with the possibility to apply pressure on the bacon while heating. Up to ten alternating layers of extrudate and fat-mimetic were placed in the forms. When using the method of in-situ heating of the fat-mimetic the emulsion gel was spread in the form and the extrudate was pressed into the gel in irregular shapes. The bacon prototypes were placed in a heating chamber and first heated to a core temperature of 40 °C, which was kept constant for one hour. Next, the product was heated to a core temperature of 85 °C at a chamber temperature of 90 °C and then cooled by a cold shower for 10 min, before storing at 2 °C.

The prototypes were visually observed regarding the adherence and the overall appearance. To examine the slicing and frying behavior, the bacon prototypes were cut into 2 mm thick slices with a slicing machine and subsequently fried in a pan until browning occurred.

### Effect of temperature and SPI concentration on gel hardness

The hardness of heat induced SPI gels at different concentrations, heating temperatures and with different coagulants was investigated. The aim was to find the best conditions to produce hard gels, which were expected to build good networks between extrudate and fat mimetics leading to a good cohesion of bacon prototypes.

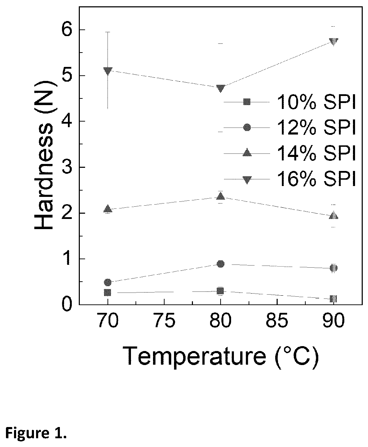

Figure 1 shows the influence of heating temperature on the hardness of soy protein gels with 10, 12, 14 and 16 % SPI, heated for 30 minutes, respectively.

The visual appearance of gels with 12, 14 and 16 % SPI were assessed. All gels had a smooth structure with an even surface. Gels with 12 % SPI showed a low stability, whereas higher concentrated gels were more stable. A slight improvement of stability could be detected by raising the temperature from 70 to 80 °C at all three concentrations. The hardness of gels with 10, 12, 14 and 16 % soy protein isolate, heated to 70, 80 and 90 °C for 30 minutes, respectively, was also tested. Increasing the SPI concentration had a pronounced effect, while the temperature didn't strongly influence gel hardness. Gels with 14 % and 16 % SPI formed firm gels with a hardness ranging between 1.93 ± 0.24 to 2.35 ± 0.14 N and 4.73 ± 0.97 to 5.75 ± 0.33 N. Dispersions with 10 and 12 % SPI formed weak gels with hardness values between 0.12 ± 0.01 and 0.88 ± 0.05 N. Therefore, 14 and 16 % SPI and a heating temperature of 85 °C were chosen for further experiments.

### Effect of coagulant addition on gel hardness

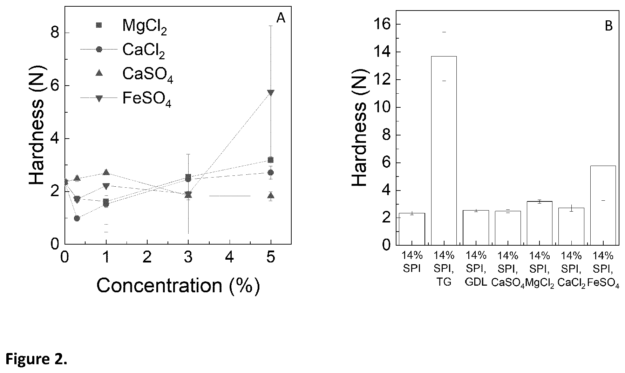

Figure 2 (A) shows the influence of CaCl₂, MgCl₂, CaSO₄ and FeSO₄ addition in concentrations between 1 and 5 % to a soy gel with 14 % SPI. The addition of salts changed the hardness of the gels in all samples. By adding CaSO₄, the gel hardness increased to a maximum of 2.70 ± 0.11 N at 1 % and decreased afterwards to values below the hardness of the pure SPI gel. In contrast, the hardness of gels with CaCl₂ and MgCl₂ first decreased at a concentration of 0.3 %, but then increased to hardness values of 2.72 ± 0.25 N and 3.18 ± 0.14 N, respectively, at a salt concentration of 5 %. By adding FeSO₄, the hardness first decreased or stayed constant at concentrations between 0.3 and 3 % and then increased to a value of 5.76 ± 2.51 N at 5 %.

The effects of the addition of transglutaminase, glucono-δ-lactone and the salts to a 14 % SPI gel can be seen in Figure 2 (B). The addition of transglutaminase led to the hardest gel with 13.68 ± 1.77 N. All gels with the other coagulants showed increased gel hardness between 2.48 ± 0.11 and 5.76 ± 2.51 N. Gels with transglutaminase, MgCl₂ and Cacl₂ at concentrations of 3 and 5 % and CaSO₄ at concentrations with 0.3 and 1 % appear smooth and homogeneous, whereas gels with glucono-δ-lactone and other salt concentrations looked firm but were instable and had a crumbly texture. Unlike the other coagulants, FeSO₄ changed the color and odor of the gels at concentrations between 1 and 5 %. The color became brown-red. It was remarkable that the outer surface was darker than the inner parts. Additionally, the gels had an unpleasant, blood-like smell. Thus, it was concluded that ferrous sulfate isn't suitable as coagulant.

### Tensile Tests of Bound Fat-mimetic-Extrudate Samples

The best adhesion method for the bacon prototype was assessed. First, the previously analyzed SPI gels were tested as binders between the two layers. Then, due to unsatisfactory results, several modifications in the production of the adhered fat-extrudate samples were tested with the same tensile test.

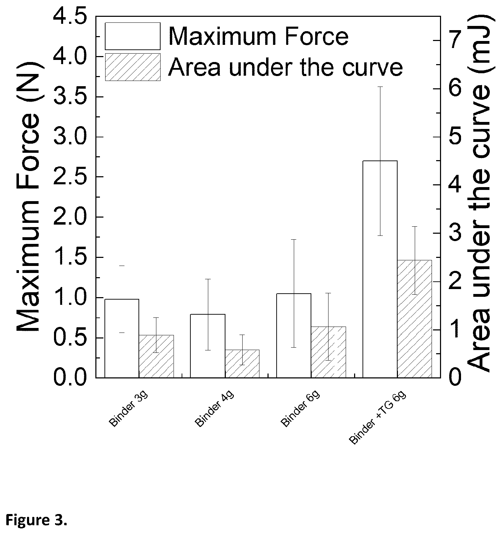

The graph in Figure 3 shows the maximum force and the area under the curve of fat-extrudate samples adhered with SPI binder, measured during the tensile test. To examine the influence of the amount of binder, 29.6 mg/cm² (3 g per sample), 39.5 mg/cm² (4 g per sample) and 59.3 mg/cm² (6 g per sample) were tested. Moreover, the influence of the type of binder was tested by using the strongest known binder variation containing 0.42 % TG. No difference was observed between varying amounts of binder in the samples regarding maximum force and area under the curve. In contrast, the addition of TG to the binder led to a higher maximum force (2.70 ± 0.93 N) and a higher area under the curve (2.44 ± 0.71 mJ). This shows that the binder with TG led to a better adhesion between fat-mimetic and extrudate, since higher forces and more energy were necessary to pull the samples apart. The samples with pure binder all broke at the binder phase, whereas the samples adhered with TG-binder showed breakage at the fat-mimetic-phase and the binder phase. Moreover, the binder phase was visible as separate gel film on the extrudate which was easily deductible showing that the gel didn't form a strong network with the other layers.

During the preparation for the tensile test, the adhesion of the samples with pure SPI binder was already very weak which made it difficult to cut them into squares without making them fall apart. This, plus the fact that the values were too low to give reproducible values, could also explain the high standard deviations obtained with the tensile test.

### Adherence Modifications

To modify the adhesion, extrudate and emulsion-gel were gelled and heated in the same step (in-situ heating of the emulsion gel) instead of using gelled and pre-heated fat-mimetics. Additionally, the samples were varied by coating the extrudate with TG-solution, SPI-powder and/or gluten-powder and by pre-cooking the extrudate.

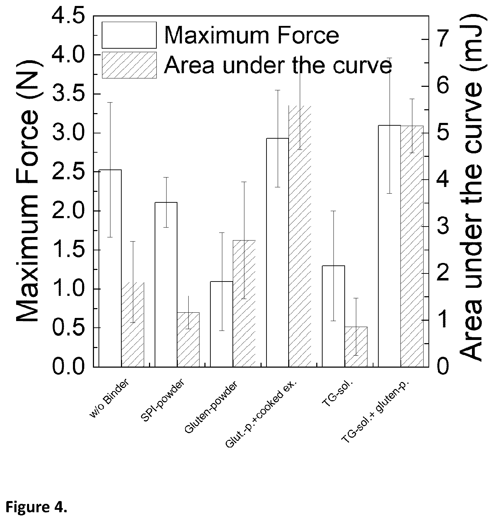

Figure 4 shows that samples with in-situ heated emulsion gels and without binder already show a higher maximum force (2.53 ± 0.87 N) and area under the curve (1.81 ± 0.87 mJ) than samples with preheated emulsion gels and SPI binder. An additional coating of the extrudate with SPI powder had no beneficial effect on the adhesiveness, while coating with gluten powder resulted in a stronger adhesiveness inside the sample: While the maximum force is lower than for the samples without additional binding system, the stronger adhesiveness is reflected in a high area under the curve with 2.71 ± 1.25 mJ. This can also be observed in the samples after the tensile test. In contrast to the first two variations, the samples with gluten coating showed rupture inside the fat phase and not only at the fat-mimetic extrudate interphase.

The best results regarding adhesiveness were obtained by a combination of cooked extrudate with gluten-coating and a combination of coating with TG-solution and gluten-powder. Both variations showed the highest values with 2.93 ± 0.63 N and 5.59 ± 0.95 mJ for the sample with cooked extrudate and 3.09 ± 0.87 N and 5.15 ± 0.58 mJ for the sample with TG-solution. This correlates with the visual observation, where the breakage during the pulling apart mainly occurred in the fat phase, proving a high adhesiveness between the two phases.

Coating the extrudate only with 10 % (w/w) TG-solution decreased the adhesion compared to the sample without binder. The maximum force with 1.29 ± 0.71 N was comparable to the sample coated with gluten-powder (1.09 ± 0.63), but lower than the sample without binder (2.53 ± 0.87 N) and the area under the curve showed the lowest value in this test series with 0.86 ± 0.62 mJ. Samples coated with TG-solution broke at the interphase due to a weak adhesion between the phases.

In conclusion, the adhesiveness was substantially improved by heating the emulsion gel inside the form with the extrudate, by cooking the extrudate, coating with TG and coating with gluten-powder. Promising results for the production of a plant-based bacon prototype could be obtained especially by combining different modification methods.

### Sensory analysis of smoked bacon analogue product

A descriptive sensory test of an unsmoked bacon analogue was conducted with 25 panelists by comparing it to a pork meat bacon and a vegan bacon made of seitan. Additionally, the influence of increasing smoking times was investigated with the aim to adapt the taste of the bacon analogues to a meat bacon. Moreover, a second sensory analysis was performed to determine the smoke flavor intensity and the preference of these samples.

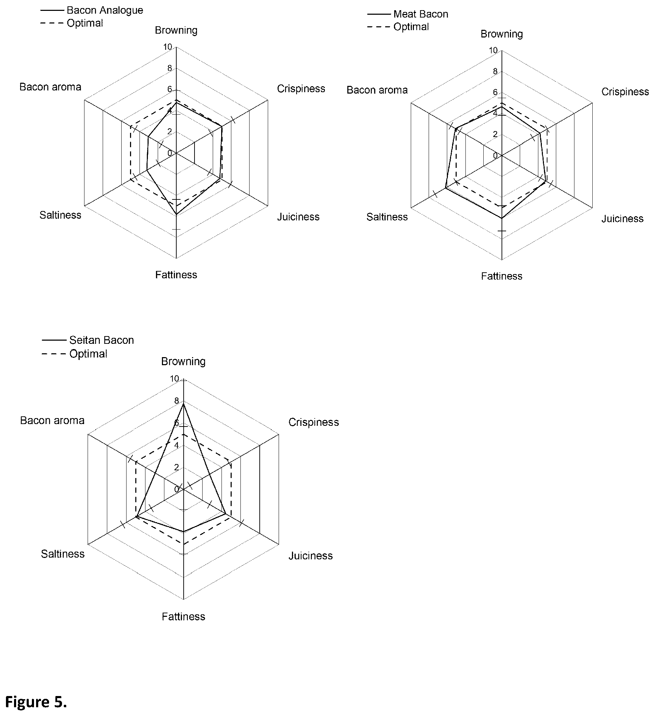

The sensory analysis of the 3 different bacon types revealed that the meat bacon was the most preferred with good bacon aroma, browning and juiciness, while being too fatty, too salty and not crispy enough. The self-produced bacon analogue showed a good browning, crispiness and juiciness, while being too fatty, not salty enough and having a too low bacon aroma. Its preference value was slightly lower than the meat bacon (Figure 5). The seitan bacon was the least preferred. It had a good saltiness but was too dark in color and lower than the optimum in crispiness, juiciness, fattiness and bacon aroma.

Figure 5 shows the average values of the sensory analysis of the unsmoked bacon analogue (A), a meat bacon (B) and a vegan seitan bacon by "Wheaty" (C) related to the personal expectation of a perfect bacon product (optimal). The attributes browning, crispiness, juiciness, fattiness, saltiness and bacon aroma were evaluated on a scale from 0 (don't like at all) to 10 (like very much).

By smoking the bacon analogues, their surface became darker and more orange. Panelists could detect a slight increase in smoke aroma intensity with increasing smoking time, but no significant preference between the different smoking intensities was observed. The unsmoked sample tended to be the least preferred, while the sample which was smoked for 30 min was the most preferred.

### Effect of potato proteins and fiber, pea cell wall and transglutaminase on the cohesiveness of vegan bacon

The impact of several functional ingredients (potato proteins and fiber, pea cell wall and transglutaminase) on the cohesiveness of vegan bacon prototypes was tested. The levels tested for each ingredient are summarized in Table 2. The corresponding compositions for each part of the vegan bacon recipe are detailed in the Tables 3, 4, and 5. TMAE (textured meat analogue extrudate) is an alternative term for plant protein extrudate as used herein. FAH (fat analogue) is an alternative term for fat mimetic as used herein.

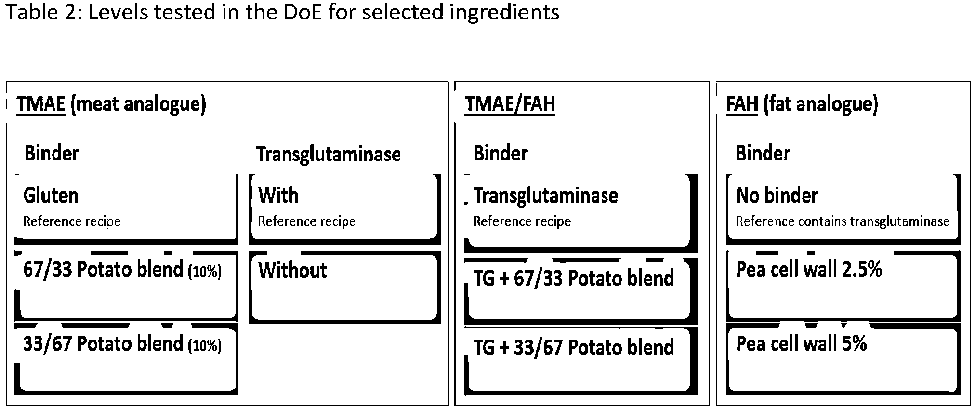

**Table 3: Composition of TMAE (textured meat analogue extrudate)**

| **Ingredient** | **REF** | **T01** | **T02** | **T03** | **T04** | **T05** | **T06** | **T07** | **T08** | **T09** |
|---|---|---|---|---|---|---|---|---|---|---|
| *Wheat Gluten* | 17.7% | 17.7% | 17.7% | 17.7% | 0.0% | 0.0% | 0.0% | 0.0% | 0.0% | 0.0% |
| *Potato fibers* | 0.0% | 0.0% | 0.0% | 0.0% | 6.7% | 6.7% | 6.7% | 3.3% | 3.3% | 3.3% |
| *Potato proteins* | 0.0% | 0.0% | 0.0% | 0.0% | 3.3% | 3.3% | 3.3% | 6.7% | 6.7% | 6.7% |
| *Transglutaminase* | 5.6% | 5.6% | 0.0% | 5.6% | 0.0% | 5.6% | 5.6% | 5.6% | 5.6% | 0.0% |
| *Boiled texturized extrudates* | 76.7% | 76.7% | 82.3% | 76.7% | 90.0% | 84.4% | 84.4% | 84.4% | 84.4% | 90.0% |

**Table 4: Composition of FAH (fat analogue)**

| **Ingredient** | **REF** | **T01** | **T02** | **T03** | **T04** | **T05** | **T06** | **T07** | **T08** | **T09** |
|---|---|---|---|---|---|---|---|---|---|---|
| *Soya isolated solution 10%* | 29.2% | 29.6% | 28.2% | 28.9% | 29.6% | 28.2% | 28.9% | 29.6% | 28.2% | 28.9% |
| *Fat blend* | 68.3% | 69.3% | 65.8% | 67.6% | 69.3% | 65.8% | 67.6% | 69.3% | 65.8% | 67.6% |
| *Pea fibers* | 0.0% | 0.0% | 5.0% | 2.5% | 0.0% | 5.0% | 2.5% | 0.0% | 5.0% | 2.5% |
| *NaCl* | 1.0% | 1.1% | 1.0% | 1.0% | 1.1% | 1.0% | 1.0% | 1.1% | 1.0% | 1.0% |
| *Transglutaminase solution 10%* | 1.5% | 0.0% | 0.0% | 0.0% | 0.0% | 0.0% | 0.0% | 0.0% | 0.0% | 0.0% |

**Table 5: Composition of binder between layers**

| **Ingredient** | **REF** | **T01** | **T02** | **T03** | **T04** | **T05** | **T06** | **T07** | **T08** | **T09** |
|---|---|---|---|---|---|---|---|---|---|---|
| *Transglutaminase solution 10%* | 100.0% | 100.0% | 63.3% | 63.3% | 63.3% | 100.0% | 63.3% | 63.3% | 63.3% | 100.0% |
| *Potato fibers* | 0.0% | 0.0% | 12.1% | 24.6% | 24.6% | 0.0% | 12.1% | 12.1% | 24.6% | 0.0% |
| *Potato proteins* | 0.0% | 0.0% | 24.6% | 12.1% | 12.1% | 0.0% | 24.6% | 24.6% | 12.1% | 0.0% |

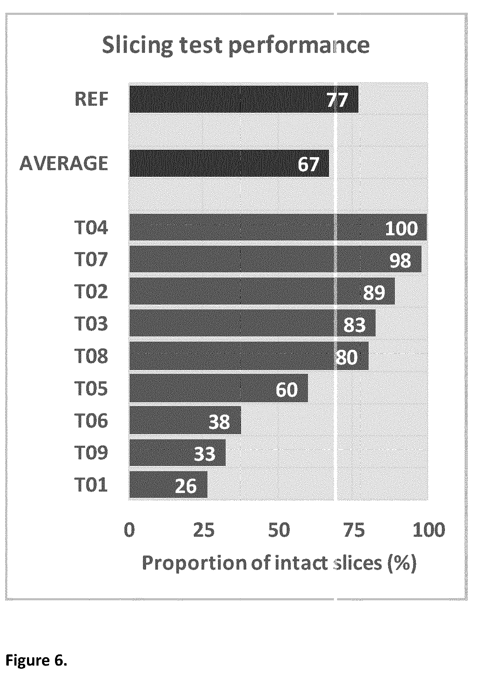

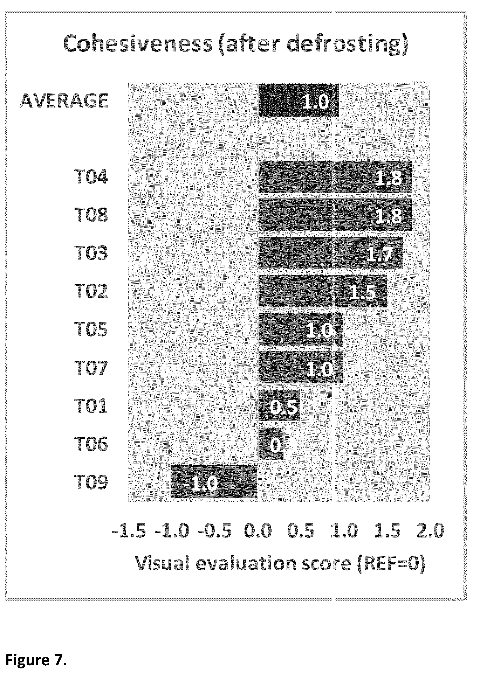

In total, nine vegan bacon prototypes were produced and evaluated by various techniques, e.g. breakage frequency during slicing and folding, as well as visual evaluation of cohesiveness after defrosting and grilling. Significant differences between the prototypes were found for most measured properties, and a majority of prototypes achieved a better performance than the reference as shown on Figure 6 and Figure 7.

Observed differences between bacon prototypes could be well explained by the modulation of binder composition, and overall it was found that:
- The composition of the binder that goes between the TMAE and FAH layers is the most critical parameter to ensure a good product cohesiveness after defrosting. The best performance is obtained when the potato blend rich in fiber (67/33) is used in addition to transglutaminase.
- The composition of the TMAE and FAH is the most critical parameter to achieve a good cohesiveness after grilling. Best results are obtained when gluten is added to the TMAE and when 5% pea cell wall is added to the FAH. Further experiments showed that the addition of 2.5% pea cell wall to the FAH performed even better than 5% pea cell wall due to reduced grittiness or perceived "bad taste" by some panelists (data not shown).
- In order to get the best cohesion results, pea cell wall was dispersed in the melted fat blend. This solution was added under shear into the protein solution.

The conditions leading to a bacon with the best possible cohesiveness are summarized in Table 6. In addition to the findings listed above, it is interesting to notice that adding transglutaminase in the TMAE does not bring any benefit.

**Table 6: Summary of best conditions to obtain a product with a good cohesiveness.**

| | **Binder TMAE** | **TG in TMAE** | **Binder FAH** | **Binder TMAE/FAH** |
|---|---|---|---|---|
| **Slicing test performance** | | | None or Pea cell wall 5% | 67/33 PB + TG |
| **Gravity test performance** | Gluten or 67/33 PB | | None or Pea cell wall 5% | 67/33 PB + TG |
| **Folding test performance** | Gluten | | | 67/33 PB + TG |
| **Cohesiveness after defrosting** | Gluten or 67/33 PB | | None or Pea cell wall 5% | 67/33 PB + TG |
| **Cohesiveness after grilling** | 67/33 PB | | Pea cell wall 5% | 33/67 PB + TG |
| **Hardness after grilling** | | | Pea cell wall 5% | |
| **Best consensus** | **Gluten or 67/33 PB** (depends on objectives) | **No** (no added value) | **Pea cell wall 5%** | **67/33 PB + TG** |

The darker the color, the more important the factor (for hardness, it is assumed that "the harder, the better")

### Effect of using agglomerate and fibrous extrudate

The effect of using agglomerate extrudate with small, non-aligned fibers (in recipe 1 below) and fibrous extrudate with longer, aligned fibers (in recipes 2 and 3 below) was also tested.

**Table 7**

| | **RECIPE 1** | **RECIPE 2** | **RECIPE 3** |
|---|---|---|---|
| | % mass | | |
| **Extrusion - TMAE production** | | | |
| Protein pea | 32.4% | 32.4% | 32.4% |
| Vital Wheat Gluten | 13.9% | 13.9% | 13.9% |
| Salt NaCl lodised | 0.3% | 0.3% | 0.3% |
| Water | 53.5% | 53.5% | 53.5% |
| Texture | Agglomerated TMAE used | Fibrous TMAE used | Fibrous TMAE used |
| | | | |

| **Frozen TMAE Boiling** | | | |
|---|---|---|---|
| Water | 96.00% | 96.00% | 96.00% |
| Non iodized salt | 4.00% | 4.00% | 4.00% |
| | | | |
| Solution uptake (water+salt) during boiling and after draining | 26.0% | 25.7% | 28.7% |
| | | | |

| **Meat Formulation** | | | |
|---|---|---|---|
| TMAE - Boiled in salted water and Drained | 80.2% | 80.2% | 82.3% |
| Wheat Gluten | 11.4% | 11.4% | 11.7% |
| UMAMI FLAVOUR | 1.97% | 1.97% | 1.97% |
| Bacon meaty | 1.25% | 1.25% | 1.25% |
| SMOKE FLAV | 0.48% | 0.48% | 0.48% |
| Canola oil | 4.7% | 4.7% | 2.4% |
| | | | |
| Ratio Gluten/TMAE boiled&drained | 14.2% | 14.2% | 14.2% |
| | | | |

| **Fat Analogue production** | | | |
|---|---|---|---|
| Soy Protein Isolate Supro 37 | 2.9% | 2.9% | 2.9% |
| Demineralised water | 26.1% | 26.1% | 26.1% |
| Shea Stearin | 20.3% | 20.3% | 20.3% |
| Canola oil | 47.3% | 47.3% | 47.3% |
| Pea Cell wall | 2.5% | 2.5% | 2.5% |
| NaCl Non lodized | 1.0% | 1.0% | 1.0% |

The amounts of each ingredient in the final bacon product are shown in Table 8.

**Table 8**

| **Vegan Bacon** | **RECIPE 1** | **RECIPE 2** | **RECIPE 3** |
|---|---|---|---|
| Water | 45.20% | 45.63% | 47.48% |
| Canola oil | 15.74% | 14.74% | 12.89% |
| Wheat Gluten | 8.44% | 8.71% | 8.95% |
| Protein pea | 14.18% | 14.72% | 14.52% |
| Vital Wheat Gluten | 6.08% | 6.33% | 6.23% |
| Shea Stearin | 5.25% | 4.78% | 4.75% |
| Umami Flavour | 1.46% | 1.51% | 1.51% |
| Salt NaCl | 1.00% | 0.99% | 1.08% |
| Bacon meaty Flavour | 0.93% | 0.96% | 0.96% |
| Soy Protein Isolate Supro 37 | 0.75% | 0.68% | 0.68% |
| Pea cell wall | 0.65% | 0.59% | 0.59% |
| Smoke Flavour | 0.36% | 0.37% | 0.37% |
| ***SUM*** | ***100.00%*** | ***100.00%*** | ***100.00%*** |

The agglomerated TMAE had a maximal force of between 100 to 250 N. The fibrous TMAE had a maximal force of between 250 to 320 N.

Sensory evaluation was made of the sliced bacon made using each recipe.

Agglomerated TMAE recipe 1 did not have the desired texture. Vegan bacon loaves had good cohesion during the production, but the fibers were judged to be too small, and there was a loss of bite during sensory evaluation.

Fibrous TMAE recipe 2 had the desired texture. The fibers were longer, and it had better bite and better cohesion on cooked bacon slices during sensory evaluation.

Fibrous TMAE recipe 3 is the same as recipe 2, but with less oil. Compared with recipe 2, a better cohesion of the vegan bacon loaves was observed during production and the bite was judged the same during sensory evaluation.

## Claims

1. A method of making a bacon analogue product, said method comprising
a. Preparing a plant protein extrudate by wet extrusion;
b. Preparing by using soy protein isolate (SPI) a 14% w/w SPI dispersion, wherein the SPI dispersion further comprises transglutaminase;
c. Preparing a fat mimetic by emulsifying a plant protein dispersion and a lipid phase, wherein the fat mimetic is prepared by emulsifying a mixture of 30% w/w of a plant protein dispersion and 70% w/w of a lipid phase;
d. Arranging the plant protein extrudate, fat mimetic, and SPI dispersion in layers, by adding the plant protein extrudate layer, followed by a defined amount of the SPI dispersion and then by adding the fat mimetic;
e. Pressing the arranged layers;
f. Heating to obtain a cohesive mass;
g. Cooling;
h. Optionally smoking, slicing or shredding.

2. A method according to claim 1, wherein the plant protein extrudate is a textured plant protein extrudate.

3. A method according to claims 1 and 2, wherein the plant protein extrudate is a fibrous plant protein extrudate.

4. A method according to claims 1 to 3, wherein the plant protein extrudate has a water content of not less than 45% w/w.

5. A method according to claims 1 to 4, wherein heating step f) comprises
a. heating to a core temperature of 40°C; and
b. heating to a core temperature of 85°C.

6. A bacon analogue product obtained by the method according to claims 1 to 5 comprising:
a. Plant protein extrudate prepared by wet extrusion;
b. A soy protein isolate dispersion comprising 14 w/w soy protein isolate and transglutaminase; and
c. Fat mimetic comprising 30% w/w of a plant protein isolate dispersion emulsified in 70% w/w of a lipid phase.

7. The bacon analogue product according to claim 6, wherein the plant protein extrudate is a fibrous plant protein extrudate.

## Patentansprüche

1. Verfahren zum Fertigen eines Speck-analogen Produkts, das Verfahren umfassend
a. Herstellen eines Pflanzenproteinextrudats durch Nassextrusion;
b. Herstellen, durch Verwenden von Sojaproteinisolat (SPI), einer 14 Gew.-%-SPI-Dispersion, wobei die SPI-Dispersion ferner Transglutaminase umfasst;
c. Herstellen eines Fettmimetikums durch Emulgieren einer Pflanzenproteindispersion und einer Lipidphase, wobei das Fettmimetikum durch Emulgieren einer Mischung aus 30 Gew.-% einer Pflanzenproteindispersion und 70 Gew.-% einer Lipidphase hergestellt wird;
d. Anordnen des Pflanzenproteinextrudats, des Fettmimetikums und der SPI-Dispersion in Schichten, durch Zugeben der Pflanzenproteinextrudatschicht, gefolgt von einer definierten Menge der SPI-Dispersion und dann durch Zugeben des Fettmimetikums;
e. Pressen der angeordneten Schichten;
f. Erhitzen, um eine kohäsive Masse zu erhalten;
g. Kühlen;
h. Wahlweise Räuchern, Schneiden oder Zerkleinern.

2. Verfahren nach Anspruch 1, wobei das Pflanzenproteinextrudat ein texturiertes Pflanzenproteinextrudat ist.

3. Verfahren nach den Ansprüchen 1 und 2, wobei das Pflanzenproteinextrudat ein faseriges Pflanzenproteinextrudat ist.

4. Verfahren nach den Ansprüchen 1 bis 3, wobei das Pflanzenproteinextrudat einen Wassergehalt von nicht weniger als 45 Gew.-% aufweist.

5. Verfahren nach den Ansprüchen 1 bis 4, wobei der Heizschritt f) umfasst
a. Erhitzen auf eine Kerntemperatur von 40 °C; und
b. Erhitzen auf eine Kerntemperatur von 85 °C.

6. Speck-analoges Produkt, erhalten durch das Verfahren nach den Ansprüchen 1 bis 5, umfassend:
a. Pflanzenproteinextrudat, hergestellt durch Nassextrusion;
b. eine Sojaproteinisolatdispersion, umfassend zu 14 Gew.-% Sojaproteinisolat und Transglutaminase; und
c. Fettmimetikum, umfassend zu 30 Gew.-% eine Pflanzenproteinisolatdispersion, emulgiert in 70 Gew.-% einer Lipidphase.

7. Speck-analoges Produkt nach Anspruch 6, wobei das Pflanzenproteinextrudat ein faseriges Pflanzenproteinextrudat ist.

## Revendications

1. Procédé de fabrication d'un produit analogue de bacon, ledit procédé comprenant
a. La préparation d'un extrudat de protéines végétales par extrusion humide ;
b. La préparation, en utilisant un isolat de protéines de soja (SPI), d'une dispersion de SPI à 14 % p/p, dans lequel la dispersion de SPI comprend en outre de la transglutaminase ;
c. La préparation d'un mimétique de graisse en émulsionnant une dispersion de protéines végétales et une phase lipidique, dans lequel le mimétique de graisse est préparé en émulsionnant un mélange de 30 % p/p d'une dispersion de protéines végétales et de 70 % p/p d'une phase lipidique ;
d. L'agencement de la dispersion d'extrudat de protéines végétales, le mimétique de graisse et la dispersion de SPI en couches, en ajoutant la couche d'extrudat de protéines végétales, suivie d'une quantité définie de la dispersion de SPI, puis en ajoutant le mimétique de graisse ;
e. Le pressage des couches agencées ;
f. Le chauffage pour obtenir une masse cohésive ;
g. Le refroidissement ;
h. Éventuellement, le fumage, le tranchage ou l'effilochage.

2. Procédé selon la revendication 1, dans lequel l'extrudat de protéines végétales est un extrudat de protéines végétales texturé.

3. Procédé selon les revendications 1 et 2, dans lequel l'extrudat de protéines végétales est un extrudat de protéines végétales fibreux.

4. Procédé selon les revendications 1 à 3, dans lequel l'extrudat de protéines végétales a une teneur en eau d'au moins 45 % p/p.

5. Procédé selon les revendications 1 à 4, dans lequel l'étape de chauffage f) comprend
a. le chauffage jusqu'à une température à cœur de 40 °C ; et
b. le chauffage jusqu'à une température à cœur de 85 °C.

6. Produit analogue de bacon obtenu par le procédé selon les revendications 1 à 5, comprenant :
a. Un extrudat de protéines végétales préparé par extrusion humide ;
b. Une dispersion d'isolat de protéines de soja comprenant 14 p/p d'isolat de protéines de soja et de transglutaminase ; et
c. Un mimétique de graisse comprenant 30 % p/p d'une dispersion d'isolat de protéines végétales émulsionnée dans 70 % p/p d'une phase lipidique.

7. Produit analogue de bacon selon la revendication 6, dans lequel l'extrudat de protéines végétales est un extrudat de protéines végétales fibreux.
